# EUROPEAN PATENT APPLICATION

(11) **EP 4 745 523 A1**
(43) Date of publication of application: **20.05.2026**
(21) Application number: 24212816.3
(22) Date of filing: 13.11.2024
(51) Int. Cl.: G01C 21/00

(54) **METHOD, APPARATUS AND COMPUTER PROGRAM FOR MANAGING MAP DATA**

(71) Applicant: TomTom Global Content B.V., 1011 AC Amsterdam (NL)
(72) Inventor: Gajewski, Tomasz Mariusz, 1011 AC Amsterdam (NL)
(74) Representative: Swindell & Pearson Limited

(57) **Abstract**

Certain examples provide a computer-implemented method 100 for managing map data, the method comprising: receiving 101 one or more map data change requests 202 from at least one apparatus 201, wherein each of the one or more map data change requests is indicative of a request for a change to be applied to a state of map data 203_n to generate another state of the map data; storing 102 the one or more changes of the one or more map data change requests; sending 103 the one or more changes of the one or more map data change requests to a second apparatus, wherein the second apparatus stores one or more states of map data; receiving 104, from a third apparatus 301, a request 302 for at least a portion of a particular state 204_x of map data 203_x; determining 105 whether the particular state of map data is stored at the second apparatus; in response to determining that the particular state of map data is stored at the second apparatus, performing the following: obtaining 106A, from the second apparatus, the at least portion of the particular state of map data, and sending 107A the obtained at least portion of the particular state of map data to the third apparatus; and in response to determining that the particular state of map data is not stored at the second apparatus, performing the following: obtaining 106B, from the second apparatus, at least a portion of a state of map data; applying 107B one or more of the stored one or more changes to the obtained at least a portion of the state of map data to generate at least a portion of the particular state of map data; and sending 108B the generated at least portion of the particular state of map data to the third apparatus.

## Description

### TECHNOLOGICAL FIELD

Examples of the disclosure relate to methods, apparatuses and computer programs for managing map data of a digital map.

### BACKGROUND

Spatial databases (which may also be known as a geospatial databases) are a type of database designed to store, query, and manage data that represents objects in a geometric space. Such a database may be referred to as a digital map and data stored therein, which represents map objects/features, may be referred to as map data. An example of a spatial database is TomTom International B.V.'s "TomTom Orbis Maps".

A digital map, also known as an electronic map, may comprise map data representative of map features, not least navigable elements of a network of navigable elements in a geographical region. In the following discussion of examples of the disclosure, navigable elements will be referred to simply as roads, and the network of navigable elements will be referred to simply as a road network. However, it is to be appreciated that in other examples, a navigable element could be a: foot path, hiking trail, cycle path, canal, tow path, river, railway line, or the like.

Digital maps may be used for navigation, route calculation and/or route guidance, not least by Portable Navigation Devices, PNDs, which are portable computing devices (not least such a smart phones) that include GNSS signal reception and processing functionality for positioning/determining a location of the device. In this regard, such devices may have the capability to determine one or more: "fixes", "raw" GNSS fixes or "enhanced" fixes - each fix being a time-stamped geo-position. Such PNDS/devices are well known and are widely employed as in-car or other vehicle navigation systems.

A digital map may comprise map data representative of plural map layers. A primary/base layer of a digital map may represent primary level elements of the digital map. Such primary level elements are elements of the digital map that can be referenced directly, e.g. via higher level elements. The primary level elements may represent a physical geometry and topology of a network of navigable elements, such as a network of road segments (i.e. a stretch of road between two road junctions). A network of roads may be represented via a graph of nodes and arcs. In this regard, a road segment may be represented/defined in the primary layer by two nodes and an arc therebetween.

The primary layer may serve as a base/reference layer for other/higher map layers. The primary layer may serve as a reference layer that can be used by (downstream) producers of map content/higher layer map data (e.g. producers of Value Add(ed) Data, VAD, for a VAD layer of a digital map). The higher layers may comprise attributes and associations of the attributes to particular map features (such map features themselves being defined/represented in the reference/base layer). For instance, a higher map layer may represent secondary level elements, i.e. elements of the digital map that can only be referenced in the context of their related primary element (e.g. an attribute of a road segment, not least such as a speed limit for the road segment).

A state of map data for a digital map may be considered as comprising all primary level elements and all secondary/higher level elements relevant for a particular spatial scope of the state (e.g. geographic extent/area that the state of map data represents). A state of map data may also be considered as corresponding to all elements of a certain layer.

Digital maps may be dynamically and frequently changed/updated to reflect changes/updates in their map data (e.g. map data representative of: geographical features, infrastructure, map feature attributes and other relevant information). Each change or update may result in a new/updated state of the digital map. A change may be considered to be information about a difference between two states (X and Y) of a digital map, wherein a change describes modifications to the map data which are necessary to update state X to state Y. A change may comprise modifications to be made to primary and/or secondary level elements. It is possible that a change may comprise only information about modifications to secondary level elements and/or modification to map features attributes.

A digital map may also be in the form of a versioned database, which is a type of database that maintains multiple versions or states of its data and schema over time (such schema relating to, for example: a structure of the database including: tables, fields, relationships, and constraints). A digital map may comprise consecutive states of map data, wherein a sequence of changes have been applied (in order) to a state of map data to form a sequence consecutive states of map data. This allows users to track changes, manage updates, and access (/revert to) previous states of a digital map if necessary. An example of a versioned database is TomTom International B.V.'s "TomTom Orbis Maps".

Each layer in a layered digital map may rely on one or more users (wherein "user", throughout this description, need not necessarily refer to a human user, but may also be interpreted as referring to a service or automation component) producing updates of map data, i.e. for their respective layer. In this regard, a series of messages may be received that describe a series of changes to be applied to a state of map data. Conventionally, each layer may need to expose an application programming interface, API, that enables exposure/access to a consistent state of map data (so as to enable all received changes to applied in sequence/order) whilst also allowing access to a range of past versions of states of the map data for other users to read.

Changes, i.e. received change messages, need to be "squashed"/"merged", i.e. applied (in consecutive order - e.g. corresponding to an order in which the changes were received) to the map data to change the map data from one state to another. A set of changes may form an ordered and contiguous set of changes, each change being built on top of the previous change. Conventionally, this may be done via either:
a. "squash-on-read" or "merge-on-read", wherein all change messages are stored in the map database and all the changes represented by the stored change messages are applied when reading map data. In this regard, each received change message is stored in the map database (such mere storing of received change messages is to be compared and contrasted to actually applying the changes of each received change message to map data stored in the map database so as to change the state of the map data and store the new state of the map data in the map database). With "squash-on-reading", during a reading operation (e.g. upon a request for a particular state of map data, e.g. a state of the map associated with a particular identifier, and/or a most up-to-date state of map data) all of the changes of all of the stored change messages up to the change message leading to the particular state of map data are applied, in sequence/order, to an initial/original state of map data so as to generate the requested state of map data, i.e. in which all the changes from all the change request messages until the change message leading to the particular requested state have been applied.
b. "squash-on-write" or "merge-on-write", wherein each change is applied onto a previous state upon writing, each resulting in a new state of map data which is stored in the map database. In this regard, upon receipt of each change message, the change indicated therein is applied onto the latest state of map data stored in the map database so as to change the state of the map data to a most up-to-date state of map data which is stored in the map database. Upon a request for a particular state of map data, the corresponding state can be simply retrieved.

Conventional "squash-on-read"/"merge-on-read" databases (including certain geospatial databases) may provide a smaller database and faster write times as compared to "squash-on-write"/"merge-on-write" databases. This is because, for "squash-on-read", only the information for each change has to be written to and stored in the map database - instead of each change having to be consecutively applied to a state of map data to form a set of consecutive states of map data and storing all of the consecutive states of map date (as is the case for "squash-on-write"). However, conventional "squash-on-read" geospatial databases may provide slower reading times as compared to "squash-on-write" geospatial databases. This is because all the stored changes need to be consecutively applied to a base state in order to form a desired/current/most up-to-date state - instead of being able to simply read a stored desired/current/most up-to-date state as is the case for "squash-on-write". Conventional squash-on-write geospatial databases may provide a faster read performance, but it requires a larger dataset and may have a slower write performance than squash-on-read geospatial databases.

Conventional management of map data is not always optimal. In some circumstances it can be desirable to improve the management of map data. In some examples it can be desirable to provide an improved method for updating map data (e.g. applying changes to/writing map data). In some examples it can be desirable to provide an improved method for obtaining map data (e.g. retrieving/reading map data). In some examples it can be desirable to provide an improved method for obtaining map data for which a change has been requested to be made thereto but for which the change has not yet been applied.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to at least some examples of the disclosure there is provided a computer-implemented method for managing map data, the method comprising:
receiving one or more map data change requests from at least one apparatus, wherein each of the one or more map data change requests is indicative of a request for a change to be applied to a state of map data to generate another state of the map data;
storing the one or more changes of the one or more map data change requests;
sending the one or more changes of the one or more map data change requests to a second apparatus, wherein the second apparatus stores one or more states of map data;
receiving, from a third apparatus, a request for at least a portion of a particular state of map data;
determining whether the particular state of map data is stored at the second apparatus;
in response to determining that the particular state of map data is stored at the second apparatus, performing the following:
   obtaining, from the second apparatus, the at least portion of the particular state of map data, and
   sending the obtained at least portion of the particular state of map data to the third apparatus; and
in response to determining that the particular state of map data is not stored at the second apparatus, performing the following:
   obtaining, from the second apparatus, at least a portion of a state of map data;
   applying one or more of the stored one or more changes to the obtained at least a portion of the state of map data to generate at least a portion of the particular state of map data; and
   sending the generated at least portion of the particular state of map data to the third apparatus.

According to various, but not necessarily all, examples of the disclosure there is provided an apparatus comprising means for performing the above-mentioned method.

According to various, but not necessarily all, examples of the disclosure there is provided at least one module, circuitry, processing circuitry, chipset, data processing apparatus, computer, device and/or system comprising means configured to perform the above-mentioned method.

According to various, but not necessarily all, examples of the disclosure there is provided a computer program comprising instructions, which when executed by an apparatus, cause the apparatus to perform the above-mentioned method.

According to various, but not necessarily all, examples of the disclosure there is provided an apparatus comprising:
at least one processor; and
at least one memory storing instructions that, when executed by the at least one processor, cause the apparatus at least to perform the above-mentioned method.

According to various, but not necessarily all, examples of the disclosure there is provided a non-transitory computer readable medium encoded with instructions that, when executed by at least one processor, causes at least the above-mentioned method to be performed.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, the method further comprises performing at least one verification procedure on the received one or more map data change requests.

In some but not necessarily all examples the at least one verification procedure comprises at least one of the following:
checking the one or more map data change requests are in a predetermined format;
performing a verification procedure on the one or more map data change requests to check whether it is independent of: other map data change requests and/or map data.

In some but not necessarily all examples, the method further comprises accepting the one or more map data change requests, wherein accepting the one or more map data change requests is based at least in part on the at least one verification procedure.

In some but not necessarily all examples, the at least one verification procedure comprises at least one of the following:
checking the one or more changes of the one or more map data change requests for compliance with one or more criteria;
performing a verification procedure on the one or more changes of the one or more map data change requests that is dependent on:
   other map data change requests, and/or
   the map data; and
checking for any conflicts between:
   the one or more changes of the one or more map data change requests, and
   at least one change of at least one other map data change request.

In some but not necessarily all examples, the storing and/or sending of the one or more changes is based at least in part on the at least one verification procedure.

In some but not necessarily all examples, the method further comprises sending a response to the at least one apparatus following at least of:
the accepting of the one or more map data change requests;
the storing of the one or more changes of the one or more map data change requests;
the sending of the one or more changes of the one or more map data change requests; and
the at least one verification procedure.

In some but not necessarily all examples, the one or more map data change requests are received synchronously.

In some but not necessarily all examples, the method further comprises associating and/or assigning the one or more changes of the one or more map data change requests with one or more version identifiers.

In some but not necessarily all examples, the method further comprises:
receiving a plurality of map data change requests, wherein each of the plurality of map data change requests is indicative of a change;
storing the changes of the received plurality of map data change requests (wherein the
storing of each change may be dependent at least in part on a verification procedure performed on the respective change); and
assigning consecutive and contiguous version identifiers to the stored plurality of changes.

In some but not necessarily all examples, the method further comprises enqueuing the one or more changes for sending to the second apparatus.

In some but not necessarily all examples, the method further comprises adjusting an order of the one or more changes for enqueuing the one or more changes for sending to the second apparatus.

In some but not necessarily all examples, sending the one or more changes comprises at least one of the following:
periodically sending the one or more changes to the second apparatus; and
sending newly stored changes to the second apparatus.

In some but not necessarily all examples, the one or more changes are sent to the second apparatus asynchronously.

In some but not necessarily all examples, the second apparatus stores a plurality of different versions of map data, wherein the different versions of map data are respectively associated with and/or respectively comprise map data of differing states.

In some but not necessarily all examples, the method further comprises:
requesting, from the second apparatus, information regarding a highest state stored at the second apparatus;
receiving, from the second apparatus, information regarding a highest state stored at the second apparatus;
wherein determining whether the particular state of map data is stored at the second apparatus is based on the information regarding the highest state stored at the second apparatus.

In some but not necessarily all examples, in response to determining that the particular state of map data is not stored at the second apparatus, the at least a portion of the state of map data obtained from the second apparatus is at least a portion of a highest state of map data that is stored at the second apparatus.

In some but not necessarily all examples, the method further comprises deleting one or more of the stored one or more changes, wherein the deletion is based at least in part on the received information regarding the highest state stored at the second apparatus.

In some but not necessarily all examples, the method further comprises deleting one or more of the stored one or more changes, wherein the deletion is based at least in part on determining whether a number of changes stored exceeds a threshold number.

In some but not necessarily all examples, the second apparatus comprises a database for storing the map data, and wherein:
the database is a geospatial database;
the database is versioned map database; and
the map data is map data for a map layer of a digital map.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
FIG. 1 schematically illustrates an example of a method in accordance with an example of the subject matter described herein;
FIG. 2 schematically illustrates an example of requesting map data change(s) in accordance with an example of the subject matter described herein;
FIG. 3 schematically illustrates an example of requesting map data in accordance with an example of the subject matter described herein;
FIGs. 4A and 4B schematically illustrate examples of providing map data in accordance with an example of the subject matter described herein;
FIG. 5 schematically illustrates an example of applying changes to map data in accordance with an example of the subject matter described herein;
FIG. 6 schematically illustrates a further example of requesting map data changes in accordance with an example of the subject matter described herein;
FIG. 7 schematically illustrates a further example of requesting map data in accordance with an example of the subject matter described herein;
FIG. 8 schematically illustrates a further example of applying changes to map data in accordance with an example of the subject matter described herein;
FIG. 9 schematically illustrates an apparatus in accordance with an example of the subject matter described herein; and
FIG. 10 schematically illustrates a computer program in accordance with an example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the description and drawings, a reference number without a subscript (e.g. 123) can be used as a generic reference to a feature or class/set of features. A reference number with a subscript (e.g. 123_1) can be used as a specific reference, e.g. to differentiate different instances of a feature or class/set of features. A numerical type subscript index (e.g. 123_1) can be used to indicate a specific instance of a class/a member of a set; and a nonspecific instance of the class (member of the set) can be referenced using the reference number with a variable type subscript index (e.g. 123_i).

### DETAILED DESCRIPTION

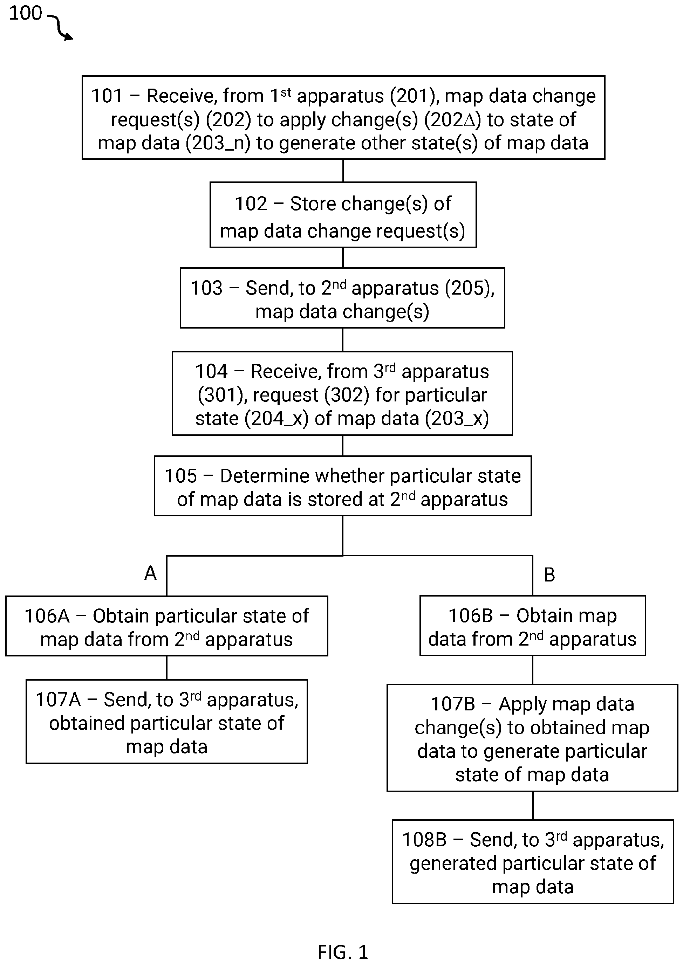

FIG. 1 schematically illustrates an example of a method 100 that provides a computer-implemented method of managing one or more portions of map data of a digital map (also known as an electronic map).

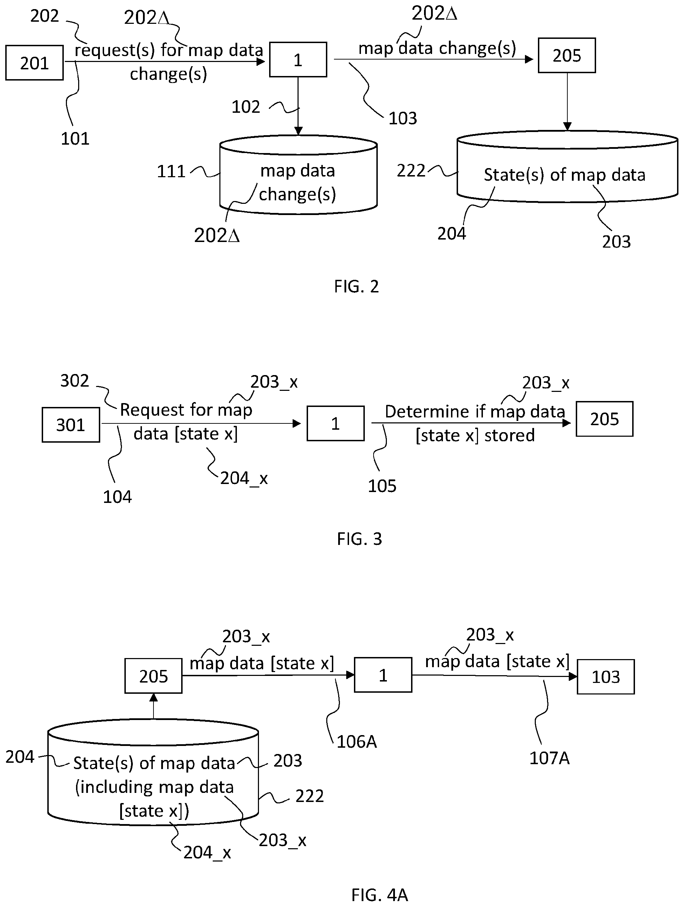

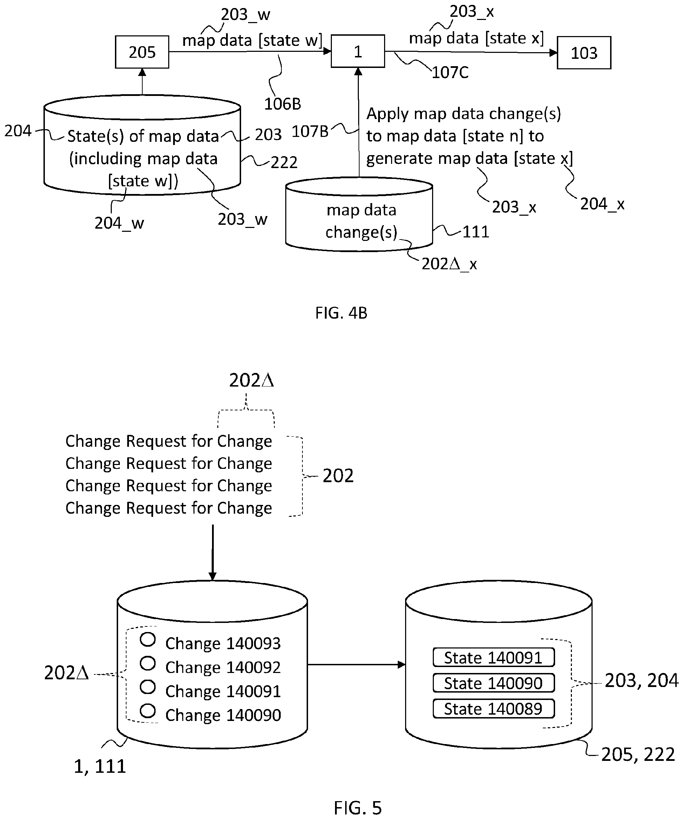

One or more of the features discussed in relation to FIG. 1 can be found in one or more of the other FIGs (not least FIGs. 2 to 4B). Accordingly, during the discussion of FIG. 1, reference will be made to FIGs. 2 to 4B and the features and reference numerals shown therein. In particular, the functionality of blocks 101 to 103 of the method 100 of FIG. 1 is shown in FIG.2. The functionality of block 104 of the method 100 is shown in FIG.3. The functionality of blocks 106A and 107A of the method 100 is shown in FIG.4A. finally, the functionality of blocks 106B to 107B of the method 100 is shown in FIG.4B.

FIG. 1 can be considered to illustrate a plurality of methods, in the sense that FIG. 1 can be considered to illustrate one or more actions performed by/at a plurality of actors/entities. FIG. 1 can therefore be considered to illustrate a plurality of individual methods performed by each respective individual actor/entity of the plurality of the actors/entities.

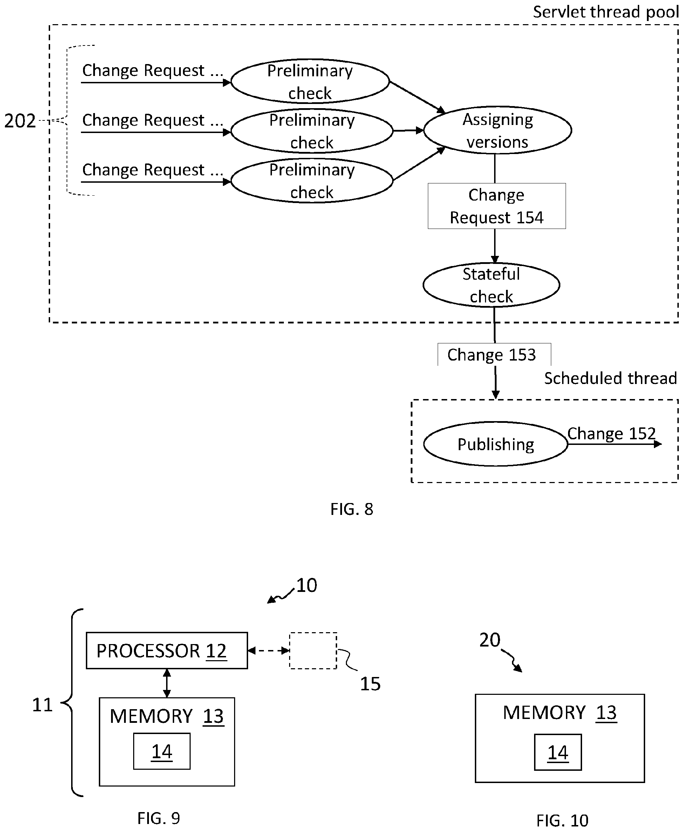

The component blocks of FIG. 1 are functional and the functions described can be performed by each respective individual actor/entity, each of which could be implemented as a device or module (such as apparatus 10 as described with reference to FIG. 9). The functions described can also be implemented via a computer program (such as computer program 14 as described with reference to FIG. 10).

The plurality of the actors/entities may for example comprise:
i. a first apparatus/entity 201 that sends a request to change a state of map data (e.g. a first user which could be a producer of map data content/changes/updates, such as for a particular layer such that the user could be considered to be an "owner" of/responsible for the particular map data layer);
ii. an entity 1 that receives the request to change the state of map data (which may be referred to herein as: "Concurrent Writing Module", "interface module" or simply "module");
iii. an entity 205 that stores map data (which may be referred to as: "map state database", or a repository of map data states or a digital map); and
iv. an entity 301 that sends a request for at least a portion of map data (e.g. a user of map data. In some examples, the entity/user 301 could be the same the first user/entity 201. In other examples, these entities are different.

In block 101, map data change requests 202 are received, at an entity/module 1 from a first apparatus 201 (e.g. a producer of map data changes/updates, such as a producer of map content or VAD for a digital map).

Each map data change request is indicative of a request for a map data change 202Δ be applied to a state of map data (e.g. a change to be applied to a state of map data of a digital map stored at/hosted by a second apparatus 205) in order to generate another state of the map data. The map data may be map layer data, i.e. map data for a particular map layer of a digital map. In this regard, each map data change request may be a message requesting that an update be made to map data for a layer of a digital map. In some examples, a map layer data producer may "own" (i.e. be responsible for producing/managing/updating) a particular layer of a digital map, and a map change request message may describe a change that the map layer data producer has made to its particular layer. The map layer data producer may send such a map change request message to a repository, which stores at least the particular layer to which the change is relevant, to request that the change that the map layer data producer has made to its particular layer data be carried out to the respective layer of the digital map stored in the repository.

The entity/module 1 may perform a verification procedure on each received map data change request. In some examples, a preliminary check may be performed to check that the map data change request is in a predetermined format. In addition or alternatively, in some examples, a verification procedure is performed on a map data change request to verify that is independent of and/or consistent with other map data change requests and/or independent of and/or consistent with map data (e.g. a particular state of map data such as a state of map data associated with a particular identifier).

The verification procedure may comprise at least one of the following:
checking the change(s) of the map data change request(s) for compliance with one or more criteria;
performing a verification procedure on the change(s) of the map data change request(s) that is dependent on:
   other map data change requests, and/or
   the map data; and
checking for any conflicts between:
   the one or more changes of the one or more map data change requests, and
   at least one change of at least one other map data change request.

After successfully completing the verification procedure, the map data change request may be accepted. Following on from which an acceptance response may be sent to the second apparatus (as discussed below in block 103).

The map data change request may be received, at the entity/module from the first apparatus, synchronously. The verification procedure and acceptance response may be a part of the synchronous receipt process.

In block 102, the change(s) of the map data change requests 202 are stored at/by the entity/module 1, e.g. in a first database 111. The storing of the change(s) may be based at least in part on the verification procedure, i.e. the change(s) are stored only if the verification procedure is successful/the change(s) are duly verified. Following on from which a storage response may be sent to the first apparatus to confirm/acknowledge the storage of each change of map data.

The change(s) of the map data change request(s) may be associated and/or assigned with one or more version identifiers. In some examples, a plurality of map data change requests are received, the plurality of changes indicated thereby are stored, and then consecutive and contiguous version identifiers are assigned to the stored plurality of changes of the plurality of map data change requests.

The change(s) may be enqueued for sending to a second apparatus 205. An order of the enqueued changes may be adjusted by the entity/module 1, e.g. based on an assigned version identifier.

The second apparatus comprise a second database 222 for storing map data, i.e. for storing map data in at least one state, and preferably in a plurality of states. The second database may be a geospatial database, a versioned map database, and the map data may be map data for a map layer of a digital map. Such a map database may be referred to as a state database or a versioned state database.

The second apparatus 205 stores one or more states 204 of map data 203. The second apparatus may store a plurality of different versions of map data, wherein the different versions of map data are respectively associated with and/or respectively comprise map data of differing states. Such states can also be seen as corresponding to a most recent change that led to the map data being in this state.

In block 103,the entity/module 1 sends the map data changes 202Δ of the map data change requests 202 to the second apparatus 205 for the second apparatus to apply ("squash"/"merge") the map data change to map data stored at the second apparatus (i.e. to obtain, from an older state of the map data stored at the second apparatus, a new/updated/current state).

As used herein, the term "squashing" or "merging", i.e. in the context of squashing or merging of changes, may mean applying a series of one or more changes onto a state of map data (for instance executing all modifications specified in the series of changes onto a state of map data) to generate map data in a new state.

The storing and sending of the change(s) may be based at least in part on the verification procedure, i.e. the change(s) are sent only if the verification procedure is successful/the change(s) are duly verified. Following on from the verification and/or storing of the change and/or sending of the change of map data to the second apparatus, a response may be sent to the first apparatus to confirm/acknowledge the verification and/or sending of the change of map data.

The map data changes 202Δ may be sent to the second apparatus 205 from the entity/module 1, asynchronously, i.e. without awaiting confirmation. This is possible because of the entity/module 1, which acts as an intermediary, ensuring the acceptability of the queued changes, while providing a synchronous interface to the first apparatus.

The map data changes 202Δ may be sent periodically to the second apparatus. In some examples, just newly stored changes are being sent to the second apparatus (i.e. only changes which have not previously been sent).

In block 104, the entity/module 1 receives, from a third apparatus 301, a request 302 for at least a portion of a particular state 204_x of map data 203_x. The particular state could be, for example, a current/latest state or an earlier/past state, and may be associated with a particular identifier, represented here by "x". The particular state could be a state which is not yet stored yet in the second apparatus 205, for instance because it incorporates changes which have not yet been "squashed"/"merged" at the second apparatus 205, or which have not yet been sent to the second apparatus 205. The portion could for example be a certain area of the map data and/or information about a certain type of entity included in the map data and/or information about a specific entity.

The third apparatus 301 may be a requestor of map layer data, such as a map layer data user. The third apparatus could also be the same as the first apparatus 201 (i.e. a map layer data producer, for instance requesting a portion of a latest/current state of map data in order to determine new changes/updates to the same).

In block 105, the entity/module 1 determines whether the requested particular state of map data 203_x, e.g. a state of map data associated with a particular identifier, is stored at the second apparatus 205.

The entity/module 1 may communicate with the second apparatus 205 to enquire whether the requested particular state of map data 203_x is stored at the second apparatus. In this regard, the entity/module may:
request, from the second apparatus, information regarding a highest state stored at the second apparatus; and
receive, from the second apparatus, information regarding a highest state stored at the second apparatus.

For instance, each state stored at the second apparatus (205) may be provided with an identifier, wherein the identifiers are unique and are ordered. Preferably, the set of unique, ordered identifiers is selected such that it is possible to ascertain, from a plurality of identifiers, which of them corresponds to a highest state.

The determining whether the particular state of map data is stored at the second apparatus may be based on the information regarding the highest state stored at the second apparatus 205, for instance the identifier associated with the state that was most recently stored by second apparatus 205. In some examples, the entity/module 1 may send such a request periodically and store, in its own memory, what the highest state that is (at that time) stored at the second apparatus.

In response to determining that the particular state of map data is stored at the second apparatus, the entity/module 1 performs the following (branch A of Fig. 1).

In block 106A, the entity/module 1 obtains, from the second apparatus, the at least portion of the particular state of map data. In this regard, the entity/module 1 may request the at least portion of the particular state of map data from the second apparatus 205 and receive the same from the second apparatus 205.

In block 106A, the entity/module 1 sends the obtained at least portion of the particular state of map data to the third apparatus 301.

Alternatively, in response to determining that the particular state of map data is not stored at the second apparatus 205, the entity/module 1 performs the following (branch B of Fig. 1).

In block 106B, the entity/module 1 obtains, from the second apparatus, at least a portion of a state of map data. The obtained at least portion of the state may be at least a portion state of map data that is stored at the second apparatus 205 and whose state is the closest available state to the particular state of map data requested in block 104. In some examples, the obtained at least a portion of the state of map data is at least a portion of a highest state of map data that is stored at the second apparatus 205.

In block 107B, the entity/module 1 applies one or more of its stored one or more changes to the obtained at least a portion of the state of map data so as to generate the requested at least a portion of the particular state of map data. In this regard, the entity/module 1 may apply a requisite number of its stored changes to the obtained portion of map data so as to change the obtained portion of map data to a state corresponding to the requested particular state or associated with the requested identifier.

In block 108B, the entity/module 1 sends the generated at least a portion of the particular state of map data to the third apparatus.

In some examples, the entity/module 1 may delete one or more of its stored changes based on determining (e.g. receiving, from the second apparatus, information indicative of) the highest state stored at the second apparatus 205. In this regard, if the module were to determine that the second apparatus 205 has states of map data up to state n stored in its versioned database, the entity/module may delete its stored changes that correspond to changes that led to an earlier state than state n. Since the entity/module 1 can obtain map data of state n from the second apparatus 205, the entity/module 1 no longer has a need to store changes to be applied, by the entity/module 1, on earlier states of map data to generate map data in state n. Hence, the entity/module can delete such redundant changes. However it is not excluded that these changes could be kept for a longer period, since they may be used to perform consistency checks. Alternatively, or in addition, in order to avoid too many changes being stored at the entity/module 1, the entity/module 1 can perform a deletion operation wherein the deletion of changes is based at least in part on determining whether a number of changes stored exceeds a threshold number.

To aid explication of the method 100 of FIG. 1 an example scenario will now be discussed, with reference made to various of the elements of figures 2 to 4B.

In this example scenario, the entity/module 1 receives, from a first apparatus 201, a request 202_x for a map data change 202Δ_x. This request is for changing map data 203_w (which is in state w) to map data 203_x that is in state x - e.g. a new/current/latest map data state. The entity/module 1 stores a copy of the map data change 202Δ_x in its own database 111. The entity/module 1 also sends a copy of the map data change 202Δ_x to the second apparatus 205 (at which map data 203_w in state w is stored in a second database 222 of the second apparatus 205) so that the second apparatus 205 can apply the map data change 202Δ_x to its stored map data 203_w to generate map data 203_x in state x, and then also store the newly generated map data 203_x having state x.

In the example scenario, the entity/module 1 then subsequently receives a request 302, from a third apparatus 301 (which could be different to or the same as the first apparatus 201 that requested the change to the map data) for a portion of map data 203_x (e.g. a portion of the map data, in state x 204_x, for a particular geographical region). The entity/module 1 determines whether map data 203_x is available and stored on the second apparatus's database 222. For instance, it may contact or have contacted the second apparatus 205 to request information about the identifier corresponding to the most recently stored state of the map on the second apparatus' database 222. This may have been done independently from the receiving of request 302, for instance on a periodic basis. It may also be that second apparatus 205 sends information about a most recent state to entity/module 1, for instance periodically, or once a new state is stored, or every n states.

In this scenario, it transpires that the second apparatus has not yet performed or completed the process of applying map data change 202Δ_x to map data state 203_w, and hence map data 203_x has not yet been generated and stored at the second apparatus' database 222. Accordingly, map data 203_x is not (yet) available from the second apparatus/database 222. The entity/module 1, upon determining that the second apparatus does not have map data 203_x available/stored thereon, requests a copy of a portion of map data 203_w from the second apparatus (such a portion corresponding to the portion [e.g. particular geographic region] that was requested by the third apparatus in its request 302), which corresponds to the latest state of map data that is available/stored at the second apparatus 205, or at least to the latest state that entity/module 1 is aware of. The entity/module 1, upon receiving the portion of map data 203_w from the second apparatus, then applies map data change 202Δ_x (which is stored at the entity/module's database 111) to the received portion of map data 203_w to generate a portion of map data 203_x in state x. The entity/module 1 then sends the portion of map data 203_x to the third apparatus.

Note that there are also scenarios in which the order or steps is different. For instance, request 302 may be received by entity/module 1 after map change request 202 is received by entity/module 1, but before map data change 202Δ_x is sent to the second apparatus 205. In such a scenario, too, the same procedure for responding to request 302 may be advantageously carried out.

Examples of the method 100 may enable the requesting/reading of map data having the most up-to-date state (i.e. with the most recent change applied thereto) irrespective of whether the map data having the most up-to-date state is stored at the second apparatus 205. For instance, when the latest change for changing map data to the most up-to-date state has yet to be applied, by the second apparatus 205, to map data stored at the second apparatus 205 in order to generate and store map data having the most up-to-date state stored at the second apparatus, the entity/module 1 can itself apply the latest change, which is stored at the entity/module 1, to map data obtained from the second apparatus 205 in order to generate map data having the most up-to-date state and send the same to an apparatus which requested the same.

Advantageously, the provision of the entity/module (with its first database for storing map data changes) that effectively acts as an intermediary/go-between between:
map layer data producers (i.e. an owner of a map layer/ map layer content creators) and
the second apparatus (and its second database - i.e. the main map data storage) provides the benefit of effectively enabling:
   synchronous writing, at the entity/module, of requests, from a map layer data producer, for map data changes (which helps reduce read latency - albeit at a cost of slower writing), and
   asynchronous writing, at the second apparatus, of map layer data changes from the entity/module (which helps improve write performance - albeit at a cost of read latency).

In effect, one can consider that in examples of the present invention, "squashing on writing" / "merging on writing" is used for the main storage of map data/map layer data - namely at the second database of the second apparatus. Whereas "squashing on reading" is used for the storage of map data changes/map layer changes data - namely at the first database of the entity/module. Also, one can consider that, in effect, examples of the present invention provide synchronous writing for writing to the first database of the entity/module and asynchronous writing for writing to the second database of the second apparatus.

Advantageously, the method 100 may provide enhanced writing and reading performance. For instance, the method 100 may provide improved/optimised overall write and read performance as compared to either:
conventional "squash-on-read" based map databases (which, whilst having good write performance for writing requests for map data changes, suffer from poor read performance for reading map data of a current/most up-to-date state because all changes need to be applied to an original/initial/first state of map data during each reading process), and
conventional "squash-on-write" based map databases (which whilst having good read performance for reading stored map data, suffer from poor write performance because each change needs to be applied to map data during the writing process. Also, during the process of applying the latest change to generate map data with the most up-to-date state and prior to the generation and storage of map data having the most up-to-date state, it would not be possible to read map data having the most up-to-date state.)

There now follows a discussion of an example of the subject matter of the present disclosure, namely an implementation of the entity/module 1, with reference to FIGs. 5 to 7 and for which similar reference numerals to those used in FIGs. 1 to 4B will be used to aid comprehension.

In some examples, the entity/module 1 is a module to be used in conjunction with a versioned map state database. This versioned map state database is a spatial database/repository of map layer data for at least one map layer. This database can be considered a digital map. However, it may also be that a plurality of such databases together are considered a digital map. In general, it will be clear to the skilled person that the proposed method can advantageously be used for versioned geospatial databases, to achieve low latency - in the sense of fast writing as well as fast reading - and optionally to allow changes to be verified and/or checked prior to them being applied to a map stored in the database.

Each map layer relies on the user (owner of the map layer / service) producing updates, e.g. map data changes 202Δ. These can take the form of a series of messages (e.g. change request messages 202) that describe the map data changes 202Δ that need to be made to map data (i.e. changes to a map data state stored at the versioned map state repository in its states database 222).

Each map layer needs to expose an Application Programming Interface, API, that allows exposure to a consistent state of map data whilst also allowing access to a range of previous states of the map data for other users to read. By using the entity/module, and exposing the read API via this entity/module, both read and write latency can be simultaneously reduced.

For the main storage of layer data (i.e. in the versioned map state database), squashing on writing is applied - which thereby provides faster reading than squashing on reading, albeit at a cost of slower writing than squashing on reading. The slower writing due to the database's use of squashing on writing is dealt with via the module 1 which, as will be discussed below, seeks to provide the best of both worlds, namely:
- from the perspective of a content producer/producer of map data change requests, synchronous writing of changes with high throughput (i.e. high throughput of writing map data states);
- efficient read with no/low latency.

The module 1 effectively enables use of both squash-on-read and squash-on-write, namely:
i) a squash-on-read database 111 of the module 1 - for storing map data changes 202Δ, and
ii) a squash-on-write database 222 of the second apparatus/repository 205 - for storing map data states.

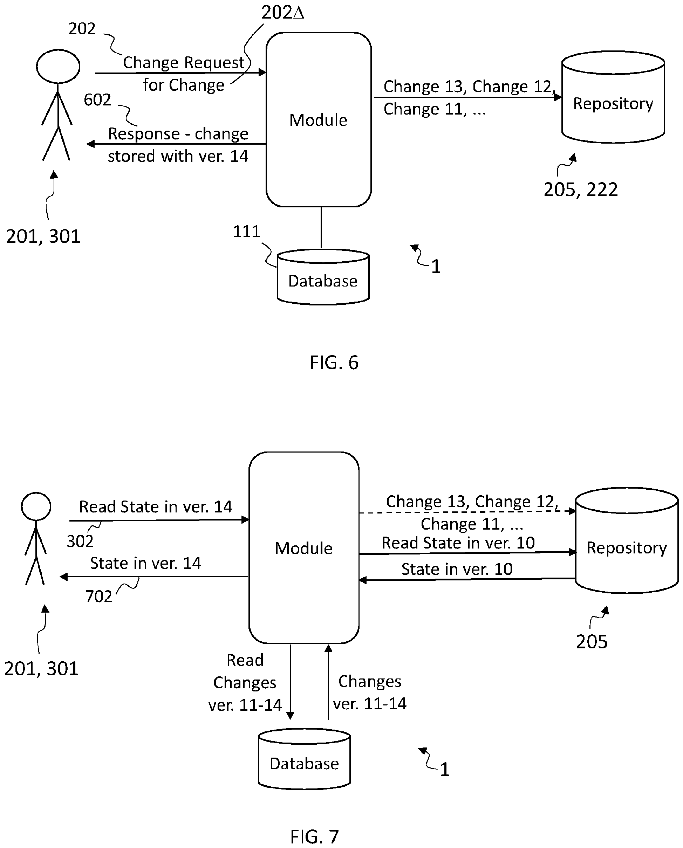

As schematically illustrated in FIG. 5 (as well as FIGs. 6 and 7), the module 1 comprises or has access to a database 111 of map data changes 202Δ (e.g. a Relational Database Management System, RDBMS, referred to herein as "changes database" 111), with logic to query another database 222 that stores underlying states 204 of map data 203 (referred to herein as a "states database" 222 of the repository 205) and combine a map state retrieved from the states database 222 with changes (from the changes database 111) that have not yet been applied onto the map data state. This way the module 1 performs only limited squashing on read while leveraging all the benefits of squashing on write.

The module 1 may contain a limited number of changes stored therein (the number of changes being dependent on the use/application/configuration at hand).

As schematically illustrated in FIG. 6, the module 1, in addition to storing map data changes 202Δ in database 111, also sends map data changes 202Δ (e.g. changes 13, 12, 11 ... as indicated in FIG. 6) to second apparatus 205 so that they can be applied to map data of a given state in order to change the map data to a new state and store the new state at the second apparatus 205, i.e. in the state database 222. Each map data change can then be applied onto a previous map state upon writing to the database 222 such that a consistent state of each version is stored in the database 222.

As schematically illustrated in FIG. 7, the module 1 also receives, from users 301 or producers 201 of map data 201, a request for map data of a certain state, e.g. a latest/most current state - for instance a request for map state having a version identifier 14 as indicated in FIG. 7. The module 1 can retrieve the map data of the certain state from the database 222 if available therein; else the module 1 can retrieve map data of another state (e.g. an earlier state) from the database 222 and apply requisite map data changes 202Δ from the changes database 111 to the retrieved map data of another state in order to change the retrieved map data to the required certain state (i.e. perform a "squash-on-read" procedure). In this regard, the module 1 can apply map data change 202Δ from the database 111 onto each other (in order) when reading map data states from the states database 222. In effect, the module 1 can perform squash-on-read when reading a map data state from the squash-on-write database 222.

There now follows a discussion of an example of a writing process for the module 1.

### Writing process

As schematically illustrated in FIG. 6, each request 202 for a map data change 202Δ, received from a customer 201 (e.g. map data producer) via a synchronous interface, is accepted (optionally having undergone and passed an initial preliminary checking/verification process - following which a version identifier is assigned to the map data change) and stored by the module 1 (wherein the storage of the map data change occurs via synchronous writing, i.e. includes the sending of a response message to the customer 201 only after a successful write - wherein the response message may comprise the assigned version identifier). Following the acceptance and storage of the map data change 202Δ in the module's changes database 111, a response 602 (i.e. a response of the synchronous interface/synchronous writing process that indicates an unblocking of operation) is sent to the customer. This allows for fast synchronous write to the changes database without the cost of applying the map data change 202Δ to a state of map data stored in the state database 222. In this regard, since simply just the change itself is written (as compared to the change being applied to a map data state to generate a new state of map data which is then itself written), the mere writing of a change is faster that the applying of a change and writing of a new state of map data.

In some examples, prior to the acceptance and storage of the map data change 202Δ in the module's changes database 111 and prior to the sending of the response 602, the map data change 202Δ may undergo a (further) checking/verification process (i.e. it may undergo a more substantive check/verification than the initial preliminary checking/verification process - if performed) that may involve a conflict check as discussed in further detail below. The map data change is then stored in the module's changes database 111, and is also enqueued for sending (e.g. periodically, for instance a periodic check may be performed to see if there are any newly received map data changes that have not yet already been sent) to second apparatus 205 so that the map data change can be applied and written to/stored at states database 222. FIG. 6 shows (formerly enqueued) map data changes 13, 12, 11 ... being sent to second apparatus 2 to be applied and written to the state database 222.

The applying and writing of the map data change to the states database can be done asynchronously. However, as mentioned above, a state that has yet to be written to the states database (e.g. state 14) can nevertheless still be provided to a requestor by applying requisite change(s) from the changes database to an earlier state retrieved from second apparatus 205 in order to generate the desired state for sending to the requestor.

The module 1 may perform a background scheduled process of sending newly stored map data changes to second apparatus 205, for asynchronous application of the map data changes to a state of map data of the states database and writing the new map data state to the states database. Due to this asynchronous process, a most recent/highest available state/version in the second apparatus may usually lag somewhat behind the highest state achievable via the most recent map data changes received and stored at the module's change database (i.e. wherein such recent map data changes have not yet been applied and written to the states database).

There now follows a discussion of an example of a reading process for the module 1.

### Reading process

As schematically illustrated in FIG. 7, a read request 302 is received by module 1. The read request may comprise various parameters used to define the extent and scope of map data requested, not least for example such as what sub-portion of map data is requested (e.g. just for a certain geographical area) as well as which state or version of map data is requested (in the example of FIG. 7, version identifier 'version 14' is requested). Such parameters can effectively be considered as equating to search query terms.

As used herein, a "version", e.g. in the context of a version of a digital map, may refer to an identifier for a particular state, i.e. specific iteration or update, of the digital map.

Read request may contain either a specific version identifier or just request a "current/latest" version. A request for the current version can be translated by the module into a specific/identified version, e.g. version X, which may or may not yet be available from the second apparatus. However, even if the requested version is not available in the second apparatus, the module is able to resolve this problem.

The request is redirected to second apparatus 205 to perform the read request with the same parameters, using the highest available version which is not higher than the requested version. In the example of FIG. 7, the highest version available from the second apparatus is version 10 (since changes 13, 12 and 11 are still in the process of being: sent to, applied to and written at the second apparatus; and since change 14 is still currently enqueued at the module and has not yet been sent to the second apparatus).

In the example of FIG. 7, it is assumed that the requested version (version 14) is not available from the second apparatus yet. Accordingly the module instead requests and uses the most current version that is available - version 10. The second apparatus returns this version to the module, responsive to the module's read request.

The module then makes a corresponding query on its database of changes to read changes 11, 12, 13 and 14 which are combined with/applied to the response from the second apparatus (i.e. map data of state 10) so as to generate a response 702 to the original read request 302 (namely the desired portion of map data of version 14) and return the response 702 containing combined data (i.e. map data generated from applying the module's database' changes to the second apparatus' most current version of map data) to the requestor 301. This may enable fast reading (since only a limited amount of squashing, i.e. of changes 11-14, is needed as opposed to squashing all previously made changes 1 to 14) without/with reduced latency (i.e. without having to wait for version 14 of the map data to be available at the second apparatus).

There now follows a discussion of examples of additional capabilities of the system architecture schematically represented in FIGs 6 and 7.

### Additional capabilities

The above described system architecture of FIGs 6 and 7 (not least having the module acting, in effect, as a portal/gateway to the underlying second apparatus digital map, and serving to receive write and read requests to the same), opens up a way for providing additional capabilities due to the ability to effect a synchronous write Application Programming Interface, API, (i.e. synchronous write of map data changes, which are received by the module in map data change requests, to the module's changes database 111) without sacrificing the overall performance.

Previously, with the asynchronous write interface provided by the second apparatus (and in the absence of the presently proposed module 1) it was not possible to effectively execute data validation (e.g. checking a request for a change against a state of map data and also checking it against other change requests, i.e. to determine whether there are any conflicts with the map data state and/or other change requests) and to assign version numbers as well as order the changes using those numbers. As a consequence, without such a module, a user/map data producer would be responsible for:
- versioning, and
- checking/verification (i.e. checking correctness of changes)

The presently proposed module is able to support users/map data producers with both these responsibilities, thereby significantly reducing an amount of overhead effort taken up by users/map data producers' process.

FIG. 8 schematically illustrates: checking of requests for map data changes, versioning requests for map data changes (i.e. assignment of a version identifier/version number to a change of a map data change request - in this regard, an assigned version number/identifier effectively serves as a designator of a change's number, defining its order among other changes), and checking of map data changes as performed by a module as proposed.

The Orbis map system/platform requires that each map layer produces its changes with assigned increasing contiguous numerical versions (i.e. consecutive numerical versions without gaps). The message requesting map data changes need to be enqueued for each layer in order according to their versions.

It is typical that a user/map data producer may run multiple parallel processes that produce map data based on different sources. Satisfying the Orbis versioning requirement would necessitate synchronizing all such processes in one place in order to assign consecutive and contiguous versions.

The proposed module may expose a Representational State Transfer, REST, API that accepts a change request. This means that at this point, a version is not assigned yet. This way the module can: receive multiple requests in parallel, assign versions, and put them in order. The version may be generated by PostgreSQL database sequence and it may allow the changes to be placed in order. If a change needs to be rejected after being assigned a version (e.g. due to failing a check/verification process), an empty change may be produced in its place.

The module may contain a table of versions which await to be accepted, and a table of changes which are enqueued/await for sending to the second apparatus. This enables the module to:
- perform preliminary validity checks in parallel
- assign versions
- perform a stateful check, i.e. critical checks against (resulting) state in sequence (this step switches from parallel to sequential processing as it requires all previous changes to be checked and accepted for publishing)
- send changes to the second apparatus asynchronously (i.e. without waiting for a response, and if necessary filling in any gaps, i.e. due to changes that fail the state check, with empty changes).

FIG. 8 shows two phases of checking the change requests and the changes themselves:
- Preliminary check - this includes checking the conformity of the change request message to Orbis model and its requirements (e.g. correct format/formatting has been used). These checks can be executed in parallel as they check each request in isolation/independently
- Stateful check/conflicts check - this checks for problems in the change data itself, including any possible problems/issues related to dependent and overlapping changes. For this reason, those checks need to be done sequentially.

Preliminary check is a set of simple independent validators. The stateful check/conflicts check, at its core, performs conflict detection between the changes of each received change request. It is noted that a change request 202 becomes a change 202Δ only after being accepted by the Stateful check/conflicts check.

There now follows a discussion of conflict detection which may be employed by the proposed module.

### Conflict Detection

When a process is producing change requests, it is possible that a state of the same data was changed in another change request by another process working in parallel. The proposed module is in a unique position to check for such conflicts because, apart from the second apparatus providing fast access to a state, the module also has access to a set of most recent changes (i.e. changes that have yet to be sent to the second apparatus and/or have yet to be applied to a state stored in the second apparatus).

The number of changes kept in the proposed module can be configured for different purposes. To achieve fast reading, the module may need only to keep those changes that were not yet written into state, i.e. which have not yet been sent to the second apparatus. To provide conflict detection, the module can be configured to keep more changes. The number of changes kept in the module may impact the lowest base version (described below) that can be used for creating a change.

A data producer may be required to provide certain required information to enable detection/identification of a conflict. To identify conflicts, the proposed module may need additional change context information, without it conflict detection will not be executed.

Such additional change context information may comprise information indicative of: a base version of the map that the change is based on, a context composed of a list of map element identifiers and a spatial context. The following is an example of additional change context information that may be required by the module in order to perform a conflicts check.

```
              ChangeRequest {
                 Change {...}
                 ChangeContext {
                    baseVersion
                    context Ids
                    spatialContext
                 }
               }
```

Base version - This field contains the version that the change is based on. A conflict may be raised when any change is recorded on the same elements since this version. The module would check for each element contained in the change request (and possibly the context, see below) and compare them to all relevant IDs related to changes made to the layer since the base version. If any of the elements were changed, a conflict is raised.

Context IDs - by default, the module can only detect conflicts on elements in the Change. In more advanced cases, it may be important that elements that were used to build the change but were not changed themselves should not have been updated by another process. In such a case, the data producer can provide the IDs of those elements in the Context IDs field.

Spatial context - For even more advanced cases, when a change is based on a spatial context (certain bounding boxes) this Spatial context can be provided for conflict detection. The module will check if any changes occurred inside the indicated spatial extent/geometry since the base version.

In order to create a non-conflicting change and to perform conflict detection properly, all read calls used to create, and later validate, the change request must use the same version. The version used for reading must be provided as the base version in the change context.

The use of change requests allows the conveyance/passing of change context along with the change itself.

To enable Conflict Detection, the module may accept change requests instead of "pure changes". Change requests 202 are simply that, a mere *request* for a change to be applied. Hence, the module has the ability to refuse a request (such as, for instance, if the preliminary check or the stateful/conflict check were failed), whereas a "pure change" is a change that has passed the preliminary and stateful/conflict checks, and which must be applied.

There now follows a brief discussion of a conflict detection process, which may be employed by the proposed module.
1. If the base version is not provided, then conflict detection is not performed.
2. Conflicts are detected on the changes (or the contexts) published after the base version.
3. Conflict is detected and a 409 (Conflict) status code is returned when:
   a. change conflict detection:
      i. any element from the checked change was modified by another change in a version higher than the base version
      ii. any element from the checked change was present in the context of another change with a version higher than the base version
   b. Context IDs conflict detection:
      i. any element from the context IDs was modified by another change since the base version
   c. Context against context conflict detection:
      i. any element from the context IDs was provided in the context of another change since the base version
   d. spatial context conflict detection:
      i. any element present on a map inside a bounding box in the base version was modified by another change since the base version
      ii. any new element appeared (i.e. was created or moved by another change) inside the bounding box since the base version
4. Conflicts are detected, with the following remarks:
   a. All IDs present in the Change are used, not only IDs of elements directly affected by the Change but also referred elements, e.g. ID of an element which the newly created element connects to (by a concept of relation or reference)
   b. The spatial context conflict detection is performed on all elements which have geometry, i.e. even if a tag was added to an element that has geometry within the bounding box, the conflict is detected
   c. The spatial context conflict detection is not performed on elements which do not have geometry (no conflicts can be detected)
   d. Spatial context against spatial context conflict detection: For the spatial context the context against context conflict detection is not performed.
   e. Spatial context against context conflict detection: For the spatial Context the context (IDs) against spatial context conflict detection is not performed.
5. Before conflict detection starts, the module waits for all previous versions to be processed.
   a. There is a timeout (e.g. default of 10 seconds) on waiting for all previous versions.
   b. In case of timeout, a 429 (Too Many Requests) status code is returned (as this is an indicator that too many parallel requests clog the service).
   c. In case timeout elapses and some previous versions are still not processed, the module is able to preempt those changes and prevent them from being stored, continuing checking and publishing the current change, within the bounds of another (longer) timeout.

It will be understood that each block illustrated in FIG. 1, as well as the further functionality described above not least with respect to FIGs. 2 to 8, can be implemented by various means, such as hardware, firmware, and/or software including one or more computer program instructions. For example, one or more of the functions described above can be performed by a duly configured apparatus (such as an apparatus 10, as described with reference to FIG. 9, comprising means configured to perform the below described functionality). One or more of the functions/functionality can be embodied by a duly configured computer program (such as a computer program 14, as described with reference to FIG. 10, comprising computer program instructions which embody the functions/functionality described below and which can be stored by a memory storage device and performed by a processor).

The blocks and functionality illustrated in FIGs. 1 to 8 can represent actions in a method, functionality performed by an apparatus 10, and/or sections of instructions/code in a computer program 14.

The instructions/code in the computer program can be loaded onto a computer or other programmable apparatus (i.e. hardware) to produce a machine, such that the instructions when performed on the programmable apparatus create means configured to implement the functions/functionality specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions configured to implement the functions/functionality specified in the blocks.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps configured to implement the functions specified in the block or blocks.

Accordingly, the blocks support: combinations of means configured to perform the specified functions; combinations of actions configured to perform the specified functions; and computer program instructions/algorithm configured to perform the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide a method and/or a corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

FIG. 9 schematically illustrates a block diagram of an apparatus 10 configured to perform the methods, processes, and functionality described in the present disclosure and illustrated with respect to FIGs. 1 to 8. In this regard, in some examples, the apparatus can be embodied as a server. The component blocks of FIG. 1 to 8 are functional and the functions described can be performed by a single physical entity. The apparatus can be embodied by a computing device, not least such as those mentioned above. However, in some examples, the apparatus can be embodied as a chip, chip set, circuitry or module, i.e. for use in any of the foregoing.

The controller 11 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 11 can be as controller circuitry. The controller 11 can be implemented in hardware alone, have certain aspects in software including firmware alone or can be a combination of hardware and software (including firmware).

The controller 11 can be implemented using instructions that enable hardware functionality, for example, by using executable instructions of a computer program 14 in a general-purpose or special-purpose processor 12 that can be stored on a computer readable storage medium 13, for example memory, or disk etc, to be executed by such a processor 12.

The processor 12 is configured to read from and write to the memory 13. The processor 12 can also comprise an output interface via which data and/or commands are output by the processor 12 and an input interface via which data and/or commands are input to the processor 12. The apparatus can be coupled to or comprise one or more other components 15 (not least for example: a radio transceiver, sensors, input/output user interface elements and/or other modules/devices/components for inputting and outputting data/commands).

The memory 13 stores instructions such as a computer program 14 comprising such instructions (e.g. computer program instructions/code) that controls the operation of the apparatus 10 when loaded into the processor 12. The instructions of the computer program 14, provide the logic and routines that enables the apparatus to perform the methods, processes and procedures described in the present disclosure and illustrated in FIGs. 1 to 8. The processor 12 by reading the memory 13 is able to load and execute the computer program 14.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 13 is illustrated as a single component/circuitry it can be implemented as one or more separate components/circuitry some or all of which can be integrated/removable and/or can provide permanent/semi-permanent/ dynamic/cached storage.

Although the processor 12 is illustrated as a single component/circuitry it can be implemented as one or more separate components/circuitry some or all of which can be integrated/removable. The processor 12 can be a single core or multi-core processor.

The apparatus can include one or more components configured to effect the methods, processes and procedures described in the present disclosure and illustrated in FIGs. 1 to 8. It is contemplated that the functions of these components can be combined in one or more components or performed by other components of equivalent functionality. The description of a function should additionally be considered to also disclose any means suitable for performing that function.

Where a structural feature has been described, it can be replaced by means configured to perform one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

In some examples, the apparatus comprises:
at least one processor 12; and
at least one memory 13 storing instructions that, when executed by the at least one processor 12, cause the apparatus at least to perform the following:
   receiving one or more map data change requests from at least one first apparatus, wherein each of the one or more map data change requests is indicative of a request for a change to be applied to a state of map data to generate another state of the map data;
   storing the one or more changes of the one or more map data change requests;
   sending the one or more changes of the one or more map data change requests to a second apparatus, wherein the second apparatus stores one or more states of map data;
   receiving, from a third apparatus, a request for at least a portion of a particular state of map data;
   determining whether the particular state of map data is stored at the second apparatus;
   in response to determining that the particular state of map data is stored at the second apparatus, performing the following:
      obtaining, from the second apparatus, the at least portion of the particular state of map data, and
      sending the obtained at least portion of the particular state of map data to the third apparatus; and
   in response to determining that the particular state of map data is not stored at the second apparatus, performing the following:
      obtaining, from the second apparatus, at least a portion of a state of map data;
      applying one or more of the stored one or more changes to the obtained at least a portion of the state of map data to generate at least a portion of the particular state of map data; and
      sending the generated at least portion of the particular state of map data to the third apparatus.

FIG. 10, illustrates a computer program 14 which may be conveyed via a delivery mechanism 20. The delivery mechanism 20 can be any suitable delivery mechanism, for example, a machine readable medium, a computer-readable medium, a non-transitory computer-readable storage medium, a computer program product, a memory device, a solid-state memory, a record medium such as a Compact Disc Read-Only Memory (CD-ROM) or a Digital Versatile Disc (DVD) or an article of manufacture that comprises or tangibly embodies the computer program 14. The delivery mechanism can be a signal configured to reliably transfer the computer program. An apparatus can receive, propagate or transmit the computer program as a computer data signal.

In certain examples of the present disclosure, there is provided a computer program comprising instructions, which when executed by an apparatus, cause the apparatus to perform at least the following or configured to cause performing at least the following:
receiving one or more map data change requests at the apparatus from at least one first apparatus, wherein each of the one or more map data change requests is indicative of a request for a change to be applied to a state of map data to generate another state of the map data;
storing, at the apparatus, the one or more changes of the one or more map data change requests;
sending the one or more changes of the one or more map data change requests from the apparatus to a second apparatus, wherein the second apparatus stores one or more states of map data;
receiving, at the apparatus from a third apparatus, a request for at least a portion of a particular state of map data;
determining, at the apparatus, whether the particular state of map data is stored at the second apparatus;
in response to determining that the particular state of map data is stored at the second apparatus, performing the following:
   obtaining, by the apparatus from the second apparatus, the at least portion of the particular state of map data, and
   sending the obtained at least portion of the particular state of map data from the apparatus to the third apparatus; and
in response to determining that the particular state of map data is not stored at the second apparatus, performing the following:
   obtaining, by the apparatus from the second apparatus, at least a portion of a state of map data;
   applying, by the apparatus, one or more of the stored one or more changes to the obtained at least a portion of the state of map data to generate at least a portion of the particular state of map data; and
   sending the generated at least portion of the particular state of map data from the apparatus to the third apparatus.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the term "determine/determining" (and grammatical variants thereof) can include, not least: evaluating, calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of receiving information should also be considered to disclose enabling, and/or causing, and/or controlling reception of information. Similarly, for example, a description of an apparatus receiving information should also be considered to disclose at least one means or controller of the apparatus enabling, and/or causing, and/or controlling the apparatus to receiving the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter (for example tile freshness parameter), or value of a parameter, should be understood to refer to "data indicative of", "data defining" or "data representative of" the relevant parameter/parameter value if not explicitly stated (unless the context demands otherwise). The data may be in any way indicative of the relevant parameter/parameter value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A computer-implemented method for managing map data, the method comprising:
receiving one or more map data change requests from at least one apparatus, wherein each of the one or more map data change requests is indicative of a request for a change to be applied to a state of map data to generate another state of the map data;
storing the one or more changes of the one or more map data change requests;
sending the one or more changes of the one or more map data change requests to a second apparatus, wherein the second apparatus stores one or more states of map data;
receiving, from a third apparatus, a request for at least a portion of a particular state of map data;
determining whether the particular state of map data is stored at the second apparatus;
in response to determining that the particular state of map data is stored at the second apparatus, performing the following:
obtaining, from the second apparatus, the at least portion of the particular state of map data, and
sending the obtained at least portion of the particular state of map data to the third apparatus; and
in response to determining that the particular state of map data is not stored at the second apparatus, performing the following:
obtaining, from the second apparatus, at least a portion of a state of map data;
applying one or more of the stored one or more changes to the obtained at least a portion of the state of map data to generate at least a portion of the particular state of map data; and
sending the generated at least portion of the particular state of map data to the third apparatus.

2. The method of claim 1, further comprising performing at least one verification procedure on the received one or more map data change requests.

3. The method of claim 2, wherein:
the at least one verification procedure comprises at least one of the following:
checking the one or more map data change requests are in a predetermined format,
performing a verification procedure on the one or more map data change requests to check whether it is independent of: other map data change requests and/or map data;
and/or optionally
the method further comprises accepting the one or more map data change requests,
wherein accepting the one or more map data change requests is based at least in part on the at least one verification procedure;
and/or optionally
the at least one verification procedure comprises at least one of the following:
checking the one or more changes of the one or more map data change requests for compliance with one or more criteria;
performing a verification procedure on the one or more changes of the one or more map data change requests that is dependent on:
other map data change requests, and/or
the map data; and
checking for any conflicts between:
the one or more changes of the one or more map data change requests, and
at least one change of at least one other map data change request.

4. The method of any of claims 2 to 3, wherein the storing and/or sending of the one or more changes is based at least in part on the at least one verification procedure.

5. The method of any of claims 2 to 4, further comprising sending a response to the at least one apparatus following at least of:
accepting of the one or more map data change requests;
the storing of the one or more changes of the one or more map data change requests;
the sending of the one or more changes of the one or more map data change requests; and the at least one verification procedure.

6. The method of any previous claim, wherein the one or more map data change requests are received synchronously.

7. The method of any previous claim, further comprising:
associating and/or assigning the one or more changes of the one or more map data change requests with one or more version identifiers;
and/or optionally
receiving a plurality of map data change requests wherein each of the plurality of map data change requests is indicative of a change,
storing each of the changes of the received plurality of map data change requests, and
assigning consecutive and contiguous version identifiers to the stored plurality of changes;
and/or optionally
enqueuing the one or more changes for sending to the second apparatus.

8. The method of any previous claim, wherein sending the one or more changes comprises at least one of the following:
periodically sending the one or more changes to the second apparatus; and
sending newly stored changes to the second apparatus.

9. The method of any previous claim, wherein the one or more changes are sent to the second apparatus asynchronously.

10. The method of any previous claim, wherein the second apparatus stores a plurality of different versions of map data, wherein the different versions of map data are respectively associated with and/or respectively comprise map data of differing states.

11. The method of any previous claim, further comprising:
requesting, from the second apparatus, information regarding a highest state stored at the second apparatus;
receiving, from the second apparatus, information regarding a highest state stored at the second apparatus;
wherein determining whether the particular state of map data is stored at the second apparatus is based on the information regarding the highest state stored at the second apparatus.

12. The method of claim 11, wherein:
in response to determining that the particular state of map data is not stored at the second apparatus, the at least a portion of the state of map data obtained from the second apparatus is at least a portion of a highest state of map data that is stored at the second apparatus;
and/or optionally
the method further comprises deleting one or more of the stored one or more changes, wherein the deletion is based at least in part on the received information regarding the highest state stored at the second apparatus.

13. The method of any previous claim, wherein the second apparatus comprises a database for storing the map data, and wherein:
the database is a geospatial database;
the database is versioned map database; and
the map data is map data for a map layer of a digital map.

14. An apparatus comprising means for performing the method of any of the previous claims.

15. A computer program comprising instructions which, when the program is executed by a computer, cause the computer to carry out the method of any of claims 1 to 13.
